Europäisches Patentamt

European Patent Office

Office européen des brevets

(11) Veröffentlichungsnummer: **0 216 096 B1**

# (12) EUROPÄISCHE PATENTSCHRIFT

(45) Veröffentlichungstag der Patentschrift: **04.03.92**

(21) Anmeldenummer: **86110895.9**

(22) Anmeldetag: **06.08.86**

(51) Int. Cl.⁵: **H04M 1/72**

(54) **Einrichtung an einem Fernsprech-Teilnehmeranschluss mit zwei wechselweise automatisch anschaltbaren Sprechstellen zur Abschaltung einer, einen ungewollten Schleifenschluss aufweisenden Sprechstelle von der Vermittlungsstelle aus.**

(30) Priorität: **16.09.85 DE 3532960**

(43) Veröffentlichungstag der Anmeldung:
**01.04.87 Patentblatt 87/14**

(45) Bekanntmachung des Hinweises auf die Patenterteilung:
**04.03.92 Patentblatt 92/10**

(84) Benannte Vertragsstaaten:
**AT BE CH DE GB IT LI LU NL SE**

(56) Entgegenhaltungen:
**DE-A- 1 933 717**
**DE-B- 1 054 123**
**FR-A- 2 492 206**
**US-A- 3 843 848**

(73) Patentinhaber: **Neumann Elektronik GmbH**
**Bülowstrasse 104 - 110**
**W-4330 Mülheim 1(DE)**

(72) Erfinder: **Neumann, Dirk, Dipl.-Ing.**
**Schemelsbruch 11**
**W-4330 Mülheim(DE)**

(74) Vertreter: **Feder, Heinz, Dr. et al**
**Dipl.-Ing. P.-C. Sroka, Dr. H. Feder Dipl.-Phys.**
**Dr. W.-D. Feder, Patentanwälte Dominikaner-**
**strasse 37**
**W-4000 Düsseldorf 11(DE)**

Rank Xerox (UK) Business Services

**Beschreibung**

Die Erfindung betrifft eine Einrichtung an einem Fernsprech-Teilnehmeranschluß mit zwei wechselweise automatisch anschaltbaren Sprechstellen zur Abschaltung einer, einen ungewollten Schleifenschluß aufweisenden Sprechstelle von der Vermittlungsstelle aus, mit den Merkmalen aus dem Oberbegriff des Patentanspruchs 1.

Es ist bekannt, bei Teilnehmeranschlüssen in Fernsprechanlagen zwei Sprechstellen an eine gemeinsame Fernsprechleitung anschließbar zu machen, indem zwischen der Fernsprechleitung und den Sprechstellen eine Wechselschaltvorrichtung angeordnet wird, mit deren Hilfe jeweils erkannt wird, wenn an einer der beiden Sprechstellen der Hörer abgehoben wird, d.h. also in der Sprechstelle durch Schließen des GU-Kontaktes die Schleife geschlossen wird. Im Ruhezustand beider Sprechstellen sind diese über die Wechselschaltvorrichtung jeweils mit einer Ader der Fernsprechleitung direkt und mit der anderen Ader über eine Vorrichtung zur Erkennung eines Schleifenschlusses verbunden. Wird in einer der Sprechstellen der Hörer abgehoben, so wird diese Sprechstelle auch mit der anderen Fernsprechader direkt verbunden, während die andere Sprechstelle vollständig von der Fernsprechleitung abgetrennt wird. Diese bekannten Wechselschaltvorrichtungen sind im allgemeinen mit bistabilen Relaisschaltungen ausgerüstet. Mit Hilfe der bekannten Wechselschaltvorrichtungen ist es also möglich, zwei Sprechstellen unabhängig voneinander wechselweise an die gleiche Fernsprechleitung anzuschalten. Ein Nachteil, der hierbei auftritt, besteht darin, daß bei einem Kurzschluß in einer der beiden Sprechstellen diese Sprechstelle dauernd automatisch an die Fernsprechleitung angeschaltet bleibt und damit die andere Sprechstelle dauernd gesperrt ist. Weiterhin kann ein ungewollter Schleifenschluß auch dadurch zustande kommen, daß beispielsweise der Teilnehmer an der einen Sprechstelle nach Beendigung des Gespräches vergißt, den Hörer auf die Gabel zu legen und somit der GU-Kontakt geschlossen bleibt.

Gemäß einem älteren Vorschlag (Europäische Patentanmeldung EP-A-0 201 734) ist eine Einrichtung bekannt, mit der es möglich ist, beim Vorliegen eines ungewollten Schleifenschlusses oder eines Kurzschlusses in einer der beiden Sprechstellen, von der Vermittlungsstelle aus diese Sprechstelle so abzuschalten, daß die andere Sprechstelle über die Wechselschaltvorrichtung wieder an die Fernsprechleitung anschaltbar ist und somit von dieser anderen Sprechstelle aus wieder Gespräche geführt werden können. Nach Beseitigung des Kurzschlusses oder ungewollten Schleifenschlusses in der ersten Sprechstelle, wird die Sprechstelle ohne Zugriff von der Zentrale aus automatisch wieder in den Zustand zurückgesetzt, in dem sie ebenfalls über die Wechselschaltvorrichtung wieder an die Fernsprechleitung anschaltbar ist.

Bei der bekannten älteren Einrichtung wird von einem ebenfalls bekannten älteren Vorschlag (DE-A 35 13 598 veröffentlicht am 16.10.86) Gebrauch gemacht, gemäß dem eine Einrichtung zur Prüfung einer Fernsprechleitung zwischen einer Vermittlungsstelle und einem Teilnehmeranschluß von der Vermittlungsstelle aus bekannt ist, mit der die Überprüfung der Fernsprechleitung von der Vermittlungsstelle aus möglich ist, ohne daß der Teilnehmeranschluß in die Prüfung einbezogen wird. Diese ältere Einrichtung besteht grundsätzlich aus zwei Teilen, nämlich einmal einer Umschaltvorrichtung, mit der auf ein von der Vermittlungsstelle über die Leitung gegebenes Steuersignal hin, die Fernsprechleitung vom Teilnehmeranschluß abgetrennt und an eine eigene Prüfvorrichtung angeschlossen wird, mittels der dann die Prüfung vorgenommen wird. Nach Abschluß der Prüfung wird die Fernsprechleitung wieder mit dem Teilnehmeranschluß verbunden.

Bei den älteren Einrichtungen können die von der Vermittlungsstelle ausgesendeten Steuersignale zur Auslösung der Prüfung einerseits Gleichspannungsignale und andererseits Wechselspannungssignale vorgegebener Spannung und Frequenz sein. Bei der Verwendung von Wechselspannungssignalen ist die Auslösung der Prüfung auch dann möglich, wenn im Fernsprechapparat des Teilnehmeranschlusses ein die Schleife schließender Kurzschluß vorhanden ist. Die Wechselspannungssignale werden mittels eines in Serie in eine Fernsprechader eingeschalteten Übertragers abgenommen.

Eine Anschaltung mittels übertrager ist auch in der FR-A-2 492 206 offenbart.

Die der Erfindung zugrunde liegende Aufgabe bestand darin, die eingangs zitierte ältere Einrichtung so abzuwandeln, daß beim Auftreten eines Kurzschlusses in einer der beiden Sprechstellen diese Sprechstelle automatisch ohne Eingriff von der Vermittlungsstelle aus abgeschaltet wird, während beim Vorliegen eines ungewollten Schleifenschlusses, beispielsweise wenn vergessen wurde, den Hörer auf die Gabel zu legen, die Sprechstelle im Rahmen eines Prüfzyklus von der Vermittlungsstelle aus abgeschaltet werden kann. In beiden Fällen sollte nach Beseitigung des Kurzschlusses oder der ungewollten Schleifenschlusses die Sprechstelle ohne Zugriff von der Zentrale aus automatisch wieder in den Zustand zurückgesetzt werden, in dem sie über die Wechselschaltvorrichtung an die Fernsprechleitung anschaltbar ist. Weiterhin sollte die Abnahme der Wechselspannungssignale zur Auslösung des Prüfzyklus so möglich sein, daß keine Übertrager oder sonstigen induktiven Bauelemente in die Leitung eingeschaltet werden müssen.

Die Lösung dieser Aufgabe erfolgt erfindungsgemäß mit den Merkmalen aus dem kennzeichnenden Teil des Patentanspruchs 1.

Vorteilhafte Ausführungsformen der erfindungsgemäßen Einrichtung sind in den Unteransprüchen beschrieben.

Wie weiter unten anhand eines Ausführungsbeispiels ausführlich erläutert, wird durch die erfindungsgemäße Einrichtung die auf der Fernsprechleitung herrschende Gleichspannung laufende überwacht, wobei unterschieden werden kann, ob beim Absinken der Spannung ein Kurzschluß oder lediglich ein ungewollter Schleifenschluß durch Nichtauflegen des Hörers in einer der beiden Sprechstellen vorliegen muß. Im Kurzschlußfall wird die defekte Sprechstelle sofort automatisch von der Wechselschaltvorrichtung abgetrennt, und zwar in der Weise, daß beiden Abschaltvorrichtungen zwischen der Wechselschaltvorrichtung und den Sprechstellen jeweils ein Setzsignal zugeführt wird, so daß zunächst beide Sprechstellen abgetrennt werden und durch Wirksamwerden der Überwachungsvorrichtung an beiden Sprechstellen festgestellt wird, in welcher der beiden Sprechstellen kein Kurzschluß vorliegt und diese Sprechstelle sogleich automatisch an die Wechselschaltvorrichtung wieder angeschlossen wird. Es können dann von dieser Sprechstelle aus sogleich wieder Gespräche geführt werden, während die defekte Sprechstelle abgeschaltet bleibt, bis der Kurzschluß behoben ist.

Liegt ein ungewollter Schleifenschluß durch Nichtauflegen des Hörers in einer der beiden Sprechstellen vor, so wird dieser Schleifenschluß beim Prüfen der Fernsprechleitung von der Vermittlungsstelle aus festgestellt. Es wird auch in diesem Falle beiden Abschaltvorrichtungen ein Setzsignal zugeführt, so daß beide Sprechstellen von der Wechselschaltvorrichtung abgetrennt werden. In diesem Falle stellt die Überwachungsvorrichtung nach Abschluß des Prüfzyklus fest, in welcher der beiden Sprechstellen die Schleife unterbrochen ist und schaltet dieses Sprechstelle wieder an die Wechselschaltvorrichtung an, während die andere Sprechstelle abgetrennt bleibt bis der ungewollte Schleifenschluß beseitigt ist.

Im folgenden wird anhand der Zeichnungen ein Ausführungsbeispiel für die erfindungsgemäße Einrichtung näher erläutert.

In den Zeichnungen zeigen:

Fig. 1 und 2     in schematischer, jeweils aneinander anschließender Darstellung ein Gesamtschaltbild einer Einrichtung zur Abschaltung von zwei wechselweise an die Fernsprechleitung anschaltbaren Sprechstellen;

Fig. 3     in einem gegenüber Fig. 2 vergrößerten und detaillierteren Schaltbild eine der beiden Abschaltvorrichtungen der Einrichtung nach Fig. 1 und 2.

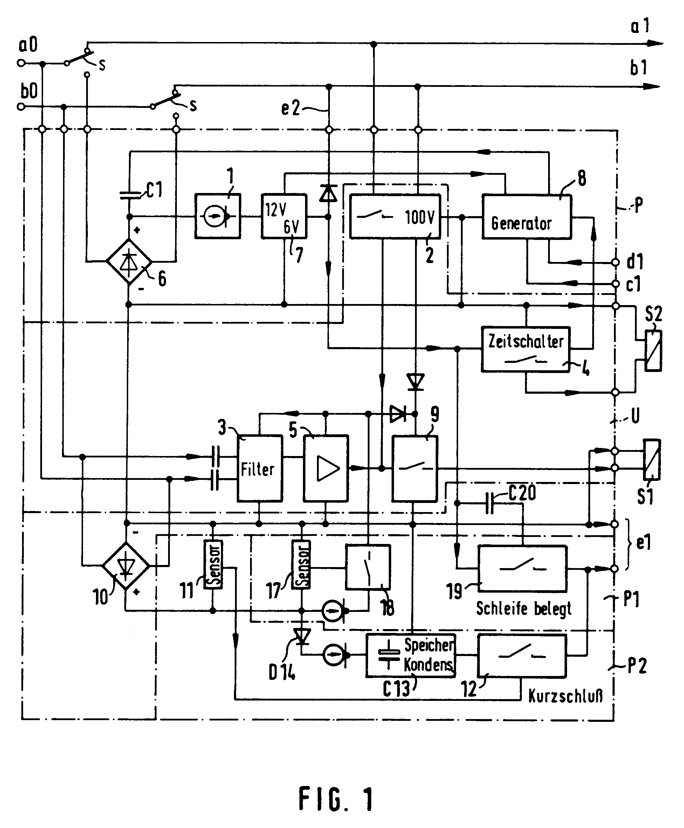

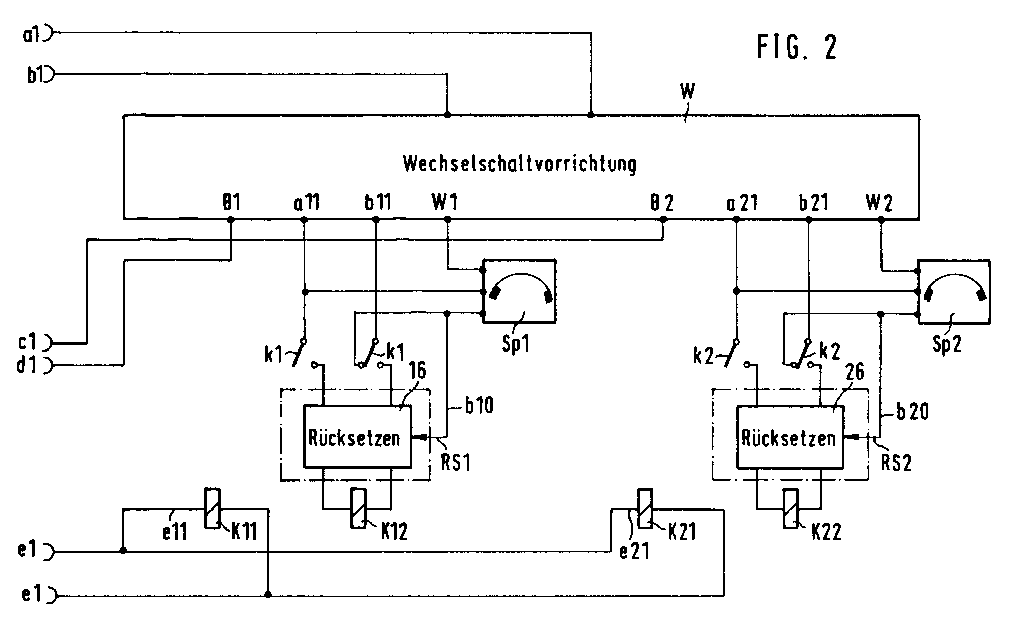

Bei der in den Fig. 1 und 2 dargestellten Schaltung schließen die am rechten Rand von Fig. 1 endenden Leitungen a1, b1, c1, d1, e1 unmittelbar an die entsprechend in Fig. 2 am linken Rand dargestellten Leitungen a1, b1, c1, d1, e1 an.

Bei der in Fig. 1 und 2 in einem Prinzipschaltbild dargestellten Einrichtung ist eine von einer nicht dargestellten Vermittlungsstelle kommende Fernsprechleitung a0, b0 über Schaltkontakte s an einen weiterführenden Abschnitt der Fernsprechleitung a1, b1 angeschlossen, der zu einer Wechselschaltvorrichtung W führt, an die zwei Sprechstellen Sp1 und Sp2 des Teilnehmeranschlusses angeschlossen sind, die über die Wechselschaltvorrichtung W wechselweise an die Fernsprechleitung a1, b1 angeschaltet werden können.

Die in der an sich bekannten Wechselschaltvorrichtung angeordneten Schaltungsteile, die im wesentlichen aus bistabilen Relaisschaltungen und Schleifenstromerkennungsschaltungen bestehen, sind nicht dargestellt und werden im folgenden nicht näher beschrieben.

Für die Funktion der Gesamteinrichtung ist lediglich von Bedeutung, daß im Ruhezustand des Teilnehmeranschlusses die Ausgänge $b_{11}$, $b_{21}$ der Wechselschaltvorrichtung W mit der Ader b1 der Fernsprechleitung verbunden sind.

Beim Abnehmen des Hörers in der Sprechstelle Sp1 wird der Ausgang $a_{11}$ mit der Ader a1 und der Ausgang B1 mit der Ader b1 der Fernsprechleitung verbunden und der Ausgang $b_{21}$ von der Ader b1 abgetrennt.

Beim Abnehmen des Hörers in der Sprechstelle Sp2 wird der Ausgang $a_{21}$ mit der Ader a1 und der Ausgang B2 mit der Ader b1 der Fernsprechleitung verbunden und dafür der Ausgang $b_{11}$ von der Ader b1 abgetrennt.

Dies bedeutet also, daß, wenn die Sprechstelle Sp1 an die Fernsprechleitung a1, b1 angeschlossen ist, gleichzeitig der Ausgang B1 an die Ader b1 angeschlossen ist und wenn die Sprechstelle Sp2 an die Fernsprechleitung a1, b1 angeschlossen ist, gleichzeitig der Ausgang B2 an die Ader b1 angeschlossen ist.

Vor der Wechselschaltvorrichtung W ist, wie in Fig. 1 dargestellt, eine Einrichtung zur Prüfung der Fernsprechleitung von der Vermittlungsstelle aus angeordnet, die eine Umschaltvorrichtung U und eine Prüfvorrichtung P aufweist.

Die Umschaltvorrichtung U ist einerseits durch ein Gleichspannungssteuersignal, beispielsweise eine Erhöhung der Leitungsspannung auf 100 V und andererseits durch ein Wechselspannungssignal ansteuerbar.

Hierzu enthält die Umschaltvorrichtung U einen an die beiden Zweige a1, b1 der Fernsprechleitung angeschlossenen Gleichspannungssteuerschalter 2, der auf eine Erhöhung der Leitungsspannung anspricht. Dieser Gleichspannungssteuerschalter 2 kann in an sich bekannter Weise auch so aufgebaut sein, daß er auf eine kurzzeitige Umpolung der Leitungsgleichspannung anspricht.

Zur Ansteuerung der Umschaltvorrichtung U mittels eines Wechselspannungssignals ist an den von der Vermittlungsstelle her kommenden Zweig a0, b0 der Fernsprechleitung in Parallelschaltung über ein aktives Filter 3 und einen Schalt-Verstärker 5 der Steuereingang eines Steuerschalters 9 angeschlossen. Der Ausgang des Steuerschalters 9 ist mit einer ersten Wicklung S1 eines bistabilen Relais verbunden, dessen Schaltkontakte s in der Fernsprechleitung a0, b0 von der Vermittlungsstelle aus gesehen vor dem Anschlußpunkt des Gleichspannungssteuerschalters angeordnet sind. Der Eingang des Steuerschalters 9, sowie die Speiseeingänge des Schalt-Verstärkers 5 und des aktiven Filters 3 sind über eine ansteuerbare Schaltvorrichtung 18 mit der Fernsprechleitung a0, b0 verbindbar. Über den Steuerschalter 9 ist auch der Gleichspannungssteuerschalter 2 an die erste Wicklung S1 angeschlossen. Beim Ansteuern der ersten Wicklung S1 des bistabilen Relais wird die Fernsprechleitung a0, b0 über die Schaltkontakte s von dem zur Wechselschaltvorrichtung W führenden Abschnitt a1, b1 abgetrennt und an die Prüfvorrichtung P angeschlossen.

Durch einen von der Prüfvorrichtung P her ansteuerbaren Zeitschalter 4, der mit einer zweiten Wicklung S2 des bistabilen Relais verbunden ist, kann der Teilnehmeranschluß über die Kontakte s wieder an die Fernsprechleitung a0, b0 angeschlossen werden.

Die Prüfvorrichtung P enthält eine über eine zum Schutz gegen Leitungsumpolungen angeordnete Gleichrichterbrücke 6 und einen Stromkonstanthalter 1 angeschlossene Vorrichtung 7 zur Erzeugung der für die Prüfvorrichtung notwendigen Versorgungsspannungen. Weiterhin enthält sie einen Niederfrequenz-Generator 8, dessen Ausgangssignale über einen Kondensator C1 der Fernsprechleitung a0, b0 zugeführt werden können. In nicht dargestellter Weise kann der Niederfrequenz-Generator Signale mit festen vorgegebenen Frequenzen abgeben, oder über einen bestimmten Frequenzbereich gewobbelt werden.

Die in Fig. 1 dargestellte Prüfvorrichtung P umfaßt weiterhin eine erste Überwachungsvorrichtung P1, die fortlaufend feststellt, ob die auf der Fernsprechleitung bei angeschlossenem Teilnehmeranschluß herrschende Gleichspannung etwa infolge eines ungewollten Schleifenschlusses unterhalb eines vorgegebenen Maximalwertes, aber noch oberhalb des einen Kurzschluß signalisierenden Minimalwertes liegt. Hierzu ist ein erster Spannungssensor 17 über eine Gleichrichterbrücke 10 mit der Fernsprechleitung a0, b0 vor den Schaltkontakten s verbunden. Der Ausgang des ersten Spannungssensors 17 ist mit dem Ansteuereingang der ansteuerbaren Schaltvorrichtung 18 verbunden, durch welche der Eingang des Steuerschalters 9 gleichspannungsmäßig mit der Fernsprechleitung verbindbar ist. Eine weitere ansteuerbare Schaltvorrichtung 19 verbindet die Vorrichtung 7 zur Erzeugung der Versorgungsspannungen mit einer Leitung e1, die zu den weiter unten beschriebenen Abschaltvorrichtung K11 und K21 führt. Ein Kondensator C20 sorgt dafür, daß sich die Schaltvorrichtung 19 verzögert selbst einschaltet, wenn ein Spannungssignal anliegt.

Die Prüfvorrichtung P umfaßt weiterhin eine zweite Überwachungsvorrichtung P2, die fortlaufend feststellt, ob die Gleichspannung auf der Fernsprechleitung a0, b0 infolge eines Kurzschlusses in der Teilnehmerstelle auf einen Wert unterhalb eines vorgegebenen Minimalwertes absinkt.

Hierzu ist ein zweiter Spannungssensor 11 an die Fernsprechleitung a0, b0 vor den Schaltkontakten s angeschlossen, dessen Ausgang mit dem Steuereingang einer ansteuerbaren Schaltvorrichtung 12 verbunden ist, deren Eingang mit einem Speicherkondensator C13 verbunden ist, der über eine Diode D14 ebenfalls ständig an die Fernsprechleitung a0, b0 angeschlossen ist. Der Ausgang der ansteuerbaren Schaltvorrichtung 12 ist wiederum mit der zu den Abschaltvorrichtung K11, K21 führenden Leitung e1 verbunden.

Wie Fig. 2 zu entnehmen, sind zwischen der Wechselschaltvorrichtung W und den beiden Sprechstellen Sp1 und Sp2 jeweils Abschaltvorrichtungen K11 bzw.K21 angeordnet, durch die eine rücksetzbare Abtrennung der Sprechstellen Sp1 bzw. Sp2 von der Wechselschaltvorrichtung W möglich ist.

Die der Sprechstelle Sp1 zugeordnete Abschaltvorrichtung ist ein bistabiles Relais mit einer Setzwicklung K11 und einer Rücksetzwicklung K12. Die Schaltkontakte k1 dieses Relais sind so angeordnet, daß sie im nichtgesetzten Zustand den Ausgang b11 der Wechselschaltvorrichtung W mit der Sprechstelle Sp1 verbinden. Die Setzwicklung K11 ist über einen Setzeingang e11 mit der Leitung e1 verbunden. Weiterhin ist eine unten näher erläuterte Überwachungsschaltung 16, die die Rücksetzwicklung K12 enthält, einerseits über einen Rücksetzeingang RS1 und eine Leitung b10 ständig mit der Sprechstelle Sp1 verbunden und über die Schaltkontakte k1 mit den Ausgängen a11, b11 der Wechselschaltvorrichtung W verbindbar.

In analoger Weise ist die der Sprechstelle Sp2 zugeordnete Abschaltvorrichtung ein bistabiles Relais mit einer Setzwicklung K21 und einer Rücksetzwicklung K22 und Schaltkontakten k2, über die im nichtgesetzten Zustand der Ausgang b21 mit der Sprechstelle Sp2 verbunden ist. Die Überwachungsvorrichtung 26 weist die Rücksetzwicklung K22 auf und ist über den Rücksetzeingang RS2 mit der Sprechstelle Sp2 verbunden und über die Schaltkontakte k2 mit den Ausgängen a21 und b21 der Wechselschaltvorrichtung W verbindbar. Die Setzwicklung K21 ist über den Setzeingang e21 mit der Leitung e1 verbunden.

Der Ausgang B1 der Wechselschaltvorrichtung W ist über eine Leitung d1 in der aus Fig. 1 ersichtlichen Weise mit der Prüfvorrichtung P verbunden, während in analoger Weise der Ausgang B2 über die Leitung c1 ebenfalls mit der Prüfvorrichtung P verbunden ist.

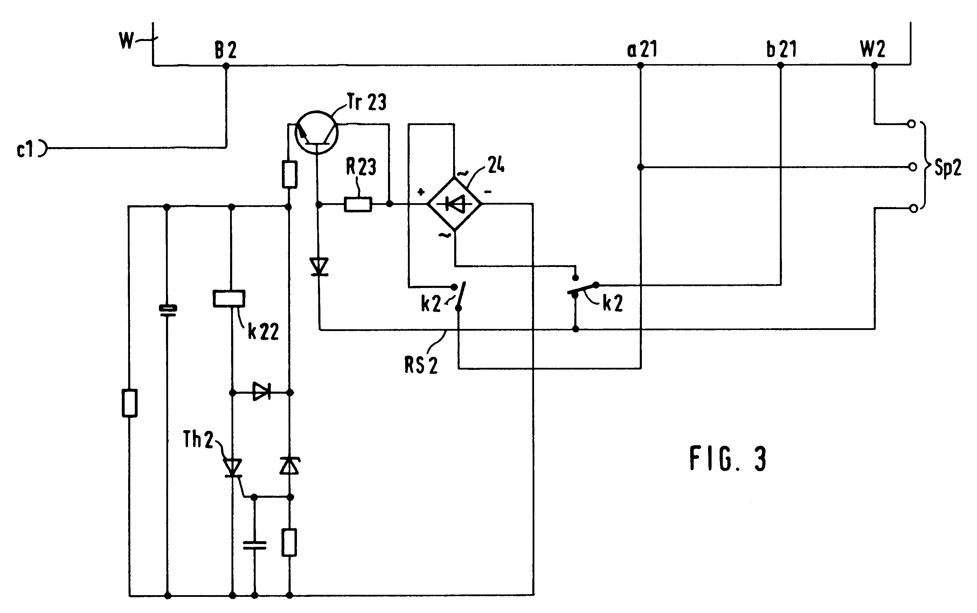

Zur näheren Erläuterung des Aufbaus der Überwachungsvorrichtung 26 dient Fig. 3.

Die Überwachungsvorrichtung 16 ist analog aufgebaut.

Wie Fig. 3 zu entnehmen, liegt in der Überwachungsvorrichtung 26 die Ruucksetzwicklung K22 des bistabilen Relais in einem Stromkreis, der von einer über die Schaltkontakte k2 an die Ausgänge a21 und b21 der Wechselschaltvorrichtung W angeschlossenen Gleichrichterbrücke 24 über einen Transistor Tr23, die Relaiswicklung K22 und einen Thyristor Th2 zurück zur Gleichrichterbrücke 24 läuft. Parallel zu diesem Stromkreis läuft ein Steuerkreis, der vom Rücksetzeingang RS2 mit der Basis des Transistors Tr23 verbunden ist.

Die Funktionsweise der in den Fig. 1 bis 3 dargestellten Einrichtung wird nachfolgend erläutert:
Wenn in einer der beiden Sprechstellen, also beispielsweise der Sprechstelle Sp2, ein Kurzschluß auftritt, ist diese Sprechstelle Sp2 aufgrund der Wirkungsweise der Wechselschaltvorrichtung W über die Schaltkontakte k2 und die Ausgänge a21, b21 ständig an die Fernsprechleitung a1, b1 angeschlossen. Dies bewirkt, daß die Sprechstelle Sp1 abgetrennt ist und von ihr keine Gespräche geführt werden können.

Es läuft nun ohne Einwirkung der Vermittlungsstelle folgender Vorgang ab:
Der zweite Spannungssensor 11 stellt fest, daß die Spannung auf der Fernsprechleitung a0, b0 auf einen Wert unterhalb eines vorgegebenen Minimalwertes, also beispielsweise auf einen Wert unterhalb von 2V, abgesunken ist. Er gibt ein Steuersignal ab, durch das die Schaltvorrichtung 12 durchgeschaltet wird und die Leitung e1 an den noch einen gespeicherten Spannungswert führenden Speicherkondensator C13 angeschlossen wird. Dies hat zur Folge, daß über die Leitung e1 den Setzeingängen e11 und e21 ein Setzsignal zugeführt und damit die Setzwicklungen K11 und K21 aktiviert werden, wodurch die Kontakte k1 und k2 umgelegt und somit beide Sprechstellen Sp1 und Sp2 von der Wechselschaltvorrichtung W abgetrennt werden.

In den Überwachungsvorrichtungen 16 und 26 laufen nun folgende Vorgänge ab:
In der in Fig. 3 dargestellten Überwachungsvorrichtung 26 bleibt der Transistor Tr23 gesperrt, weil infolge des Kurzschlusses in der Sprechstelle Sp2 die Basis des Transistors Tr23 über diesen Kurzschluß an den Ausgang a21 der Wechselschaltvorrichtung W, der negative Spannung führt, angeschlossen ist. Es fließt kein Strom durch die Rücksetzwicklung K22.

In der analog aufgebauten Überwachungsschaltung 16 ist kein Kurzschluß in der Sprechstelle Sp1 vorhanden. Der entsprechende Transistor sperrt nicht und es fließt ein Strom durch die Rücksetzwicklung K12, was zur Folge hat, daß die Sprechstelle Sp1 sogleich wieder an die Wechselschaltvorrichtung W angeschlossen wird, während die Sprechstelle Sp2 abgetrennt bleibt.

Wird in der Sprechstelle Sp2 der Kurzschluß behoben, so schaltet der Transistor Tr23 durch, die Rücksetzwicklung K22 wird aktiviert und auch die Sprechstelle Sp2 wird wieder mit der Wechselschaltvorrichtung W verbunden.

Wenn in einer der beiden Sprechstellen, also beispielsweise der Sprechstelle Sp2, ungewollt der Hörer abgenommen und liegengelassen wird, so daß ein ungewollter Schleifenschluß eintritt, ist diese Sprechstelle Sp2 aufgrund der Wirkungsweise der Wechselschaltvorrichtung W ständig an die Fernsprechleitung a1, b1 angeschlossen, während die Sprechstelle Sp1 abgetrennt ist und von ihr keine Gespräche geführt werden können.

In diesem Falle läuft folgender, dieses Mal von der Vermittlungsstelle aus eingeleiteter Prüfvorgang ab:
Zunächst muß die Einrichtung zur Prüfung der Fernsprechleitung aktiviert werden. Dies geschieht im Normalfall - also wenn kein Schleifenschluß in der Teilnehmerstelle vorliegt - indem von der Vermittlungsstelle aus eine Spannungserhöhung auf der Fernsprechleitung, beispielsweise von 60 V auf 100 V vorgenommen wird. Durch dieses Gleichspannungs-Steuersignal wird in der Umschaltvorrichtung U der Gleichspannungs-Steuerschalter 2 aktiviert und somit über den Steuerschalter 9 die Relaiswicklung S1 erregt und die Relaiskontakte s umgeschaltet.

Wenn ein Schleifenschluß vorliegt, stellt der erste Spannungssensor 17 fest, daß die Spannung auf der Fernsprechleitung a0, b0 herabgesetzt ist und sich beispielsweise in einem Bereich zwischen 13V und 6V befindet. Der Spannungssensor 17 gibt in diesem Falle ein Steuersignal ab, durch welches die ansteuerbare Schaltvorrichtung 18 durchgeschaltet wird.

Stellt sich heraus, daß infolge des Schleifenschlusses das Gleichspannungs-Steuersignal nicht angelegt werden kann, so wird ein Wechselspannungs-Steuersignal mit einer Frequenz von beispielsweise 800 Hz ausgesandt. Dieses Wechselspannungs-Signal läuft durch das aktive Filter 3 zum Schalt-Verstärker 5, dessen Schaltimpuls dem Steuereingang des Steuerschalters 9 zugeführt wird, wodurch er durchgeschaltet und die Relaiswicklung S1 aktiviert wird.

Wenn die Relaiskontakte s umgeschaltet sind, ist die Prüfvorrichtung P an die Fernsprechleitung a0, b0 angeschlossen, so daß der Schleifenschluß nicht mehr wirksam ist und wieder die volle Gleichspannung auf der Fernsprechleitung herrscht. Die Vorrichtung 7 zur Erzeugung der Versorgungsspannungen, die ihre Speisespannung aus der Fernsprechleitung erhält, wird eingeschaltet. Mit der Aktivierung der Vorrichtung 7 werden alle Einzelvorrichtungen der Prüfvorrichtung P eingeschaltet. Insbesondere wird ein Gleichspannungs-Steuersignal über die Leitung e2 auf die Ader b1 zur Wechselschaltvorrichtung W gegeben. Dort ist infolge des angenommenen Schaltzustandes, gemäß dem in der Sprechstelle Sp2 der Hörer abgenommen ist, der Ausgang B2 mit der Ader b1 verbunden, so daß das Gleichspannungs-Steuersignal über die Leitung c1 zurück zur Prüfvorrichtung P läuft und dort den Niederfrequenz-Generator 8 so ansteuert, daß ein Signal bestimmter Frequenz erzeugt und in die Fernsprechleitung a0, b0 gegeben wird, so daß in der Vermittlungsstelle erkannt werden kann, daß die Störung in der Sprechstelle Sp2 zu suchen ist.

Von der Vorrichtung 7 aus wird gleichzeitig ein Gleichspannungs-Signal auf die ansteuerbare Schaltvorrichtung 19 gegeben, die durchschaltet und somit ein Setzsignal über die Leitung e1 auf beide Abschaltvorrichtungen K11 und K21 gibt. Es werden über die Schaltkontakte k1 und k2 beide Sprechstellen von der Wechselschaltvorrichtung W abgetrennt.

Nach dem Abtrennen der defekten Sprechstelle können mittels der Prüfvorrichtung P weitere Prüfzyklen durchgeführt werden. Insbesondere wird der Niederfrequenz-Generator 8 über einen Frequenzbereich von beispielsweise 300 bis 3400 Hz durchgewobbelt, um den Frequenzgang der Fernsprechleitung zu überprüfen. Wenn der Prüfzyklus abgeschlossen ist, wird vom Zeitschalter 4 aus die Relaiswicklung S2 aktiviert und über die Kontakte s die Wechselschaltvorrichtung W wieder an die Fernsprechleitung a0, b0 angeschlossen.

Es läuft nun der gleiche Vorgang ab, wie oben anhand des Kurzschlußfalles beschrieben. Die Überwachungsvorrichtung 16 stellt fest, daß in der Sprechstelle Sp1 kein Schleifenschluß vorliegt und aktiviert die Rücksetzwicklung K12. Hierdurch wird die Sprechstelle Sp1 wieder angeschlossen. Die Überwachungsvorrichtung 26 stellt fest, daß ein Schleifenschluß vorliegt, und die Sprechstelle Sp2 bleibt abgetrennt, bis der Schleifenschluß behoben ist.

Befindet sich der Schleifenschluß in der Sprechstelle Sp1, so läuft ein analoger Vorgang ab, bei dem vom Ausgang B1 der Wechselschaltvorrichtung W über die Leitung d1 ein Steuersignal zum Niederfrequenz-Generator 8 läuft, durch das ein Erkennungssignal mit einer anderen Frequenz zur Vermittlungsstelle ausgesendet wird.

Es kann dann von der intakten Sprechstelle aus wieder ein normales Gespräch geführt werden, während die Sprechstelle, an der der Hörer nicht aufgelegt war, abgetrennt bleibt, bis der Hörer aufgelegt wird, was von der entsprechenden Überwachungsvorrichtung 26 bzw. 16 erkannt wird und zum Wiederanschalten dieser Sprechstelle an die Wechselschaltvorrichtung W führt.

**Patentansprüche**

1. Einrichtung an einem Fernsprech-Teilnehmeranschluß mit zwei wechselweise automatisch anschaltbaren Sprechstellen (Sp1, Sp2) zur Abschaltung einer, einen ungewollten Schleifenschluß aufweisenden Sprechstelle von der Vermittlungsstelle aus, mit einer zwischen der Fernsprechleitung (a1, b1) und den Sprechstellen angeordneten Wechselschaltvorrichtung (W), durch welche jeweils beim Schließen der Schleife in einer der beiden Sprechstellen diese Sprechstelle an die Fernsprechleitung angeschaltet und die andere Sprechstelle abgetrennt wird und mit einer Einrichtung zur Prüfung der Fernsprechleitung zwischen der Vermittlungsstelle und dem Teilnehmeranschluß von der Vermittlungsstelle aus, die eine unmittelbar vor dem Teilnehmeranschluß an die Fernsprechleitung angeschlossene, durch ein von der Vermittlungsstelle ausgesendetes Steuersignal ansteuerbare Umschaltvorrichtung (U-S1-S2-s) zur Abtrennung des Teilnehmeranschlusses von der Fernsprechleitung und zur Anschaltung einer Prüfvorrichtung (P) an die Fernsprechleitung aufweist, wobei in der Prüfvorrichtung eine Vorrichtung zur Erzeugung von Versorgungsspannungen (7) angeordnet ist, und durch die Prüfvorrichtung Prüfsignale vorgegebener Frequenz in die Fernsprechleitung abgegeben werden, und nach Ablauf des Prüfzyklus ein Rücksetzsignal an die Umschaltvorrichtung gegeben wird zur Wiederanschaltung des Teilnehmeranschlusses an die Fernsprechleitung, und bei der zwischen der Wechselschaltvorrichtung und den beiden Sprechstellen jeweils eine Abschaltvorrichtung (K1, K2) zur Abtrennung der betreffenden Sprechstelle von der Wechselschaltvorrichtung angeordnet ist, die ein in der Verbindungsleitung zwischen Sprechstelle und Wechselschaltvorrichtung angeordnetes bistabiles, ansteuerbares Schaltglied mit einem Setzeingang und einem Rücksetzeingang aufweist, wobei der Setzeingang mit der Prüfvorrichtung verbunden ist, die bei Einleitung des Prüfzyklus ein Setzsignal abgibt, und der Rücksetzeingang an eine mit dem Eingang der Sprechstelle verbundene Überwachungsvorrichtung angeschlossen ist, die ein Rücksetzsignal abgibt, sobald in einer Sprechstelle nach ihrer Abtrennung von der Wechselschaltvorrichtung kein Schleifenschluß vorhanden ist, dadurch gekennzeichnet, daß die Umschaltvorrichtung (U-S1-S2-s) einen ständig mit der Fernsprechleitung (a0, b0) in Parallelschaltung verbundenen, auf ein Wechselspannungssignal vorgegebener Frequenz ansprechenden Steuerschalter (9) aufweist, über den die Umschaltvorrichtung (U-S1-S2-s) angesteuert wird, wenn von einem ersten mit der Fernsprechleitung (a0, b0) verbundenen Spannungssensor (17) ein Spannungswert festgestellt wird, der zwischen einem vorgegebenen Maximalwert und einem vorgegebenen Minimalwert liegt und dadurch ein einen ungewollten Schleifenschluß anzeigendes Steuersignal erzeugt wird, wobei nach Ansteuerung der Umschaltvorrichtung (U-S1-S2-s) die Setzeingänge (e11, e21) an die Vorrichtung (7) zur Erzeugung von Versorgungsspannungen zur Zuführung des Setzsignals angeschlossen werden, und daß eine Vorrichtung (P2) zur Feststellung eines Kurzschlusses auf der Fernsprechleitung vorhanden ist mit einem zweiten Spannungssensor (11) und einem Speicherkondensator (13), die beide ständig mit der Fernsprechleitung (a0, b0) vor der Umschaltvorrichtung (U-S1-S2-s) verbunden sind, wobei der Speicherkondensator (13) über eine vom zweiten Spannungssensor (11) ansteuerbare Schaltvorrichtung (12) mit den Setzeingängen (e11, e21) verbunden wird, sobald vom zweiten Spannungssensor (11) ein Spannungswert festgestellt wird, der unterhalb eines vorgegebenen Minimalwertes liegt und dadurch ein einen Kurzschluß anzeigendes Steuersignal erzeugt wird.

2. Einrichtung nach Anspruch 1, dadurch gekennzeichnet, daß der erste Spannungssensor (17) eine ansteuerbare Schaltvorrichtung (18) ansteuert, durch welche der Eingang des Steuerschalters (9) gleichspannungsmäßig mit der Fernsprechleitung (a0, b0) verbunden wird.

3. Einrichtung nach Anspruch 1 oder 2, dadurch gekennzeichnet, daß als ansteuerbare Schaltglieder bistabile Relais dienen, deren Schaltkontakte (k1, k2) in der Verbindungsleitung zwischen der Wechselschaltvorrichtung (W) und den Sprechstellen (Sp1, Sp2) liegen, deren Setzwicklungen (K11, K21) jeweils an die Setzeingänge (e11, e21) angeschlossen sind und deren Rücksetzwicklungen (K12, K22) jeweils in einem Steuerkreis liegen, der bei von der Wechselschaltvorrichtung abgetrennter Sprechstelle (Sp1, Sp2) an diese so angeschlossen ist, daß durch eine Unterbrechung der Schleife in der Sprechstelle ein über die Rücksetzwicklung (K12, K22) führender Stromkreis (24-Pr23-K22-Th2-24) geschlossen wird.

4. Einrichtung nach einem der Ansprüche 1 bis 3, dadurch gekennzeichnet, daß die Zuführung der Speisespannungen an die Vorrichtung (7) zur Erzeugung der Versorgungsspannungen für die Prüfvorrichtung (P) über die Fernsprechleitung (a0, b0) erfolgt.

## Claims

1. Device for disconnecting an extension exhibiting an unwanted loop closure from the exchange in a system with two automatically alternatively connectable extensions (Sp1, Sp2) on a telephone subscriber line, comprising a change-over switching device (W) arranged between the telephone line (a1, b1) and the extensions, by means of which in each case when the loop is closed in one of the two extensions this extension is connected to the telephone line and the other extension is disconnected, and with a device for testing the telephone line between the exchange and the subscriber line from the exchange, which exhibits a switch-over device (U-S1-S2-s), which is connected to the telephone line directly in front of the subscriber line and can be activated by a control signal sent out by the exchange, for disconnecting the subscriber line from the telephone line and for connecting a test device (P) to the telephone line, in which arrangement a device for generating supply voltages (7) is arranged in the test device, and the test device outputs test signals of a predetermined frequency into the telephone line and after the test cycle has been completed, a reset signal is output to the switch-over device for reconnecting the subscriber line to the telephone line, and in which in each case a disconnecting device (k1, k2) for disconnecting the relevant extension from the change-over switching device is arranged between the change-over switching device and the two extensions, which disconnecting device exhibits a bistable selectable switching member with a set input and a reset input, which is arranged in the junction line between the extension and the change-over switching device, the set input being connected to the test device which outputs a set signal when the test cycle is being initiated, and the reset input is connected to a monitoring device connected to the input of the extension, which outputs a reset signal as soon as there is no loop closure in an extension after it has been disconnected from the change-over switching device, characterised in that the switch-over device (U-S1-S2-s) exhibits a control switch (9) which is continuously connected in a parallel circuit to the telephone line (a0, b0) and responds to an alternating-voltage signal of a predetermined frequency, via which control switch the switch-over device (U-S1-S2-s) is activated when a first voltage sensor (17) connected to the telephone line (a0, b0) detects a voltage value which is between a predetermined maximum value and a predetermined minimum value and, as a result, a control signal indicating an unwanted loop closure is generated, in which arrangement, after activation of the switch-over device (U-S1-S2-s), the set inputs (e11, e21) are connected to the device (7) for generating supply voltages for supplying the set signal, and in that a device (P2) for determining a short circuit on the telephone line is present with a second voltage sensor (11) and a storage capacitor (13), both of which are continuously connected to the telephone line (a0, b0) in front of the switch-over device (U-S1-S2-s), the storage capacitor (13) being connected via a switching device (12), which can be activated by the second voltage sensor (11), to the set inputs (e11, e21) as soon as the second voltage sensor (11) detects a voltage value which is below a predetermined minimum value and, as a result, a control signal indicating a short circuit is generated.

2. Device according to Claim 1, characterised in that the first voltage sensor (17) activates a selectable switching device (18) by means of which the input of the control switch (9) is DC-connected to the telephone line (a0, b0).

3. Device according to Claim 1 or 2, characterised in that, as selectable switching members, bistable relays are used, the switching contacts (k1, k2) of which are located in the junction line between the change-over switching device (W) and the extensions (Sp1, Sp2), the set windings (K11, K21) of which are in each case connected to the set inputs (e11, e21) and the reset windings (K12, K22) of which are in each case located in a control circuit which, when the extension (Sp1, Sp2) is disconnected from the change-over switching device, is connected to this extension in such a manner that a circuit (24-Pr23-K22-Th2-24) leading via the reset winding (K12, K22) is closed by an interruption of the loop in the extension.

4. Device according to one of Claims 1 to 3, characterised in that the feed voltages are supplied via the telephone line (a0, b0) to the device (7) for generating the supply voltages for the test device (P).

**Revendications**

1. Dispositif pour un raccordement d'abonné téléphonique, avec deux postes pouvant être branchés alternativement sur la ligne de façon automatique (Sp1, Sp2,) pour la coupure d'un poste présentant une fermeture de boucle involontaire par le central de communication , avec un dispositif de commutation alternée (W) disposé entre le commutateur téléphonique (a1, b1) et les postes au moyen duquel, en cas de fermeture de la boucle dans l'un des deux postes, ce poste est raccordé au conducteur téléphonique et l'autre poste est coupé, et avec un dispositif pour vérifier le conducteur téléphonique entre le central de communication et le raccordement d'abonné depuis le central de communication , qui présente un dispositif de commutation (U-51-52-S) pouvant être raccordé par un signal de commande émis par le central de communication et raccordé immédiatement avant le raccordement d'abonné au conducteur téléphonique pour couper le raccordement d'abonné du conducteur téléphonique et pour raccorder un dispositif de vérification (P) au conducteur téléphonique tandis que, dans le dispositif de vérification, est raccordé un dispositif pour produire des tensions d'alimentation (7) et que, par le dispositif de vérification, des signaux de vérification de fréquence prédéterminée sont envoyés dans le conducteur téléphonique et que, après l'achèvement du cycle de vérification, un signal de désactivation est envoyé au dispositif de commutation pour ré-enclencher le raccordement d'abonné au conducteur téléphonique et dans lequel est disposé, entre le dispositif de commutation alternée et les deux postes, un dispositif de déclenchement (K1, K2) pour couper le poste concerné du dispositif de commutation alternée qui présente un élément de commutation réglable bi-stable disposé dans le conducteur de liaison entre le poste et le dispositif de commutation alternée, avec une entrée d'activation et une entrée de désactivation, tandis que l'entrée d'activation est connectée au dispositif de vérification qui émet un signal d'activation au début du cycle de vérification, et avec une entrée de désactivation raccordée à un dispositif de surveillance connecté à l'entrée du poste et qui émet un signal de désactivation dès qu'aucune fermeture de boucle n'existe dans un poste après sa coupure par rapport au dispositif de commutation alternée, caractérisé en ce que le dispositif de commutation (U-S1-S2-s) présente un commutateur de commande (9) réagissant à un signal de tension alternative de fréquence prédéterminée et connecté en permanence avec le conducteur téléphonique (a0, b0) en montage en parallèle et par lequel le dispositif de commutation (U-S1-S2-s) est commandé si un premier détecteur de tension (17), connecté au conducteur téléphonique (a0, b0) constate une valeur de tension qui est située entre une valeur maximale prédéterminée et une valeur minimale prédéterminée et par lequel est émis un signal de commande indiquant une fermeture de boucle involontaire tandis que, après activation du dispositif de commutation (U-S1-S2-s), les entrées d'activation (e11, e21) sont raccordées au dispositif (7) pour produire des tensions d'alimentation pour alimenter le signal d'activation et en ce qu'un dispositif (P2) existe pour constater un court-circuit au conducteur téléphonique, avec un deuxième détecteur de tension (11) et un condensateur d'accumulation (13) qui sont connectés tous deux en permanence au conducteur téléphonique (a0, b0) avant le dispositif de commutation (U-S1-S2-s), tandis que le condensateur d'accumulation (13) est connecté par un dispositif de commutation (12) pouvant être commandé par un deuxième détecteur de tension (11) aux entrées d'activation (e11, e21) dès que le deuxième détecteur de tension (11) constate une valeur de tension qui est située en dessous d'une valeur minimale prédéterminée et par lequel est produit un signal de commande indiquant un court-circuit.

2. Dispositif selon la revendication 1, caractérisé en ce que le premier détecteur de tension (17) commande un dispositif de commutation (18) réglable par lequel l'entrée du commutateur de commande (9) est connectée en tension continue au conducteur téléphonqiue (a0, b0).

3. Dispositif selon la revendication 1 ou 2, caractérisé en ce qu'on utilise comme éléments de commutation réglables des relais bi -stables dont les contacts de commutation (k1, k2) se trouvent dans le conducteur de liaison,entre le dispositif de commutation alternée (W) et les postes (Sp1, Sp2) dont les enroulements d'activation (K11, K21) sont raccordés chacun aux entrées d'activation (e11, e21) et dont les enroulements de désactivation (K12, K21) se trouvent chacun dans un circuit de commande qui est raccordé dans le cas de postes (Sp1, Sp2) séparé du dispositif de commutation en ce que,par une coupure de la boucle dans le poste, un circuit de courant (24-Pr23-K22-Th2-24) passant par l'enroulement de désactivation (K12, K22) est fermé.

4. Dispositif selon l'une des revendications 1 à 3, caractérisé en ce que l'alimentation des tensions d'alimentation au dispositif (7) pour produire les tensions d'alimentation pour le dispositif de vérification (P) est effectuée par le conducteur téléphonique (a0,b0).

FIG. 1

FIG. 2

Wechselschaltvorrichtung

EP 0 216 096 B1

FIG. 3

EP 0 216 096 B1